# EUROPEAN PATENT APPLICATION

(11) **EP 4 287 098 A1**
(43) Date of publication of application: **06.12.2023**
(21) Application number: 23173983.0
(22) Date of filing: 17.05.2023
(51) Int. Cl.: G06Q 30/0207, G06F 3/12

(54) **INFORMATION MANAGEMENT APPARATUS AND INFORMATION MANAGEMENT SYSTEM**

(30) Priority: 31.05.2022 JP 2022089287
(71) Applicant: BROTHER KOGYO KABUSHIKI KAISHA, Aichi-ken 467-8561 (JP)
(72) Inventor: HAYASHI, Masahiro, Nagoya-shi, Aichi-ken, 467-8562 (JP); OKAZAKI, Naoya, Nagoya-shi, Aichi-ken, 467-8562 (JP); OKI, Satoru, Nagoya-shi, Aichi-ken, 467-8562 (JP); MORI, Tetsunori, Nagoya-shi, Aichi-ken, 467-8562 (JP); MIYAZAKI, Sadaaki, Nagoya-shi, Aichi-ken, 467-8562 (JP)
(74) Representative: Kuhnen & Wacker Patent- und Rechtsanwaltsbüro PartG mbB

(57) **Abstract**

An information management apparatus includes: a communication interface configured to communicate, via a network, with a printer configured to execute printing by using consumables; and a controller configured to execute: an offer application receiving process for receiving an offer application to a collection operator of the consumables from a terminal device configured to communicate with the communication interface; a first generating process for generating first privilege information regarding the printing by the printer in response to the offer application received in the offer application receiving process; a collection information obtaining process for obtaining collection information in the collection operator of the consumables received the offer application; and a second generating process for generating second privilege information regarding the printing by the printer in response to the collection information obtained in the collection information obtaining process.

## Description

### TECHNICAL FIELD

The present teaching is related to an information management apparatus and an information management system which manage privilege information regarding printing using a printer.

### BACKGROUND ART

Conventionally, a technique as disclosed in Japanese Patent Application Laid-Open No. JP2009-211644 is known in which points are awarded to a user as privilege information, when a consumable cartridge is collected by a collection operator after the cartridge has been used in a printer. In this conventional technique, when the cartridge is installed in the printer, printer-specific information is stored in a cartridge memory, and the printer-specific information read from the cartridge memory at the collection operator is transmitted to a server. The server identifies the user corresponding to the printer-specific information and the points are awarded to the user.

### SUMMARY

In the above technique, the privilege information is given only once when the consumables are collected by the collection operator. Therefore, it is difficult to give users a strong incentive to actively offer the consumables after use to the collection operator, and it is difficult to improve the certainty of collection.

The purpose of the present teaching is to provide an information management apparatus and an information management system which can give users a strong incentive to actively provide consumables after use to collection operators and improve the certainty of collection of the consumables.

According to an aspect of the present teaching, there is provided an information management apparatus, including: a communication interface configured to communicate, via a network, with a printer configured to execute printing by using consumables; and a controller configured to execute: an offer application receiving process for receiving an offer application to a collection operator of the consumables from a terminal device configured to communicate with the communication interface; a first generating process for generating first privilege information regarding the printing by the printer in response to the offer application received in the offer application receiving process; a collection information obtaining process for obtaining collection information in the collection operator of the consumables received the offer application; and a second generating process for generating second privilege information regarding the printing by the printer in response to the collection information obtained in the collection information obtaining process.

In the present teaching, the privilege information is generated twice in order to promote the offer of the consumables after use by the user. The controller of the information management apparatus of the present teaching executes the offer application receiving process, the first generating process, the collection information obtaining process, and the second generating process. A user who wishes to provide used consumables to the collection operator first makes an application for offer of the consumables to the collection operator by using a terminal apparatus. The offer application is received in the offer application receiving process, and the first privilege information is generated in the first generating process in response to the received offer application. The user sends the used consumables to the collection operator, and the collection information of the consumables is transmitted from the collection operator to the information management apparatus. The transmitted collection information is obtained in the collection information obtaining process. In response to the obtaining of the collection information, the second privilege information is generated in the second generating process. In the present teaching, the first privilege information is generated when the consumables which have been used leave the user's possession, and the second privilege information is generated when the collection of the consumables is confirmed by the collection operator. The first and second privilege information are, for example, so-called points, which can be used in some way when the user prints using the printer. According to this teaching, since the privilege information is generated twice, the user is given a strong incentive to proactively provide the consumables after use to the collection operator. As a result, the reliability of consumable collection can be improved.

According to the present teaching, it is possible to provide the users with a strong incentive to proactively offer the consumables after use to the collection operator, thereby improving the certainty of consumable collection.

### BRIEF DESCRIPTION OF THE DRAWINGS

FIGs. 1A and 1B are a functional block diagram representing overall schematic configuration of a printing service delivery system according to one embodiment of the teaching.
FIG. 2 illustrates an ink cartridge recycle process and a reuse flow.
FIG. 3 is a software block diagram for various processes in the embodiment.
FIGs. 4A and 4B are illustrations of display screens for a registration notice and a collection notice which are displayed on a displaying unit of a mobile terminal.
FIGs. 5A and 5B are a sequence chart depicting an example of a control procedure performed by the mobile terminal, an information management server, a recycle server, and a printer working together.
FIGs. 6A and 6B are a sequence chart depicting an example of a control procedure performed by the mobile terminal, the information management server, the recycle server, and the printer working together in a modified example where checking before generating secondary points is performed by using printer information.
FIGs. 7A and 7B are a sequence chart depicting an example of a control procedure performed by the mobile terminal, the information management server, the recycle server, and the printer working together in another modified example where the checking before generating the secondary points is performed by using user IDs.

### DESCRIPTION OF THE EMBODIMENT

The embodiment of the teaching will be described with reference to the drawings.

This embodiment is an embodiment in which a prepaid printing service (hereinafter referred to as "prepaid printing service" as appropriate) is applied to a printing service delivery system 1. In the prepaid printing service, a user as a customer pays a fee in advance to use printing functions of a printer. The printing service delivery system is an example of an information management system.

### <Outline of printing service delivery system>

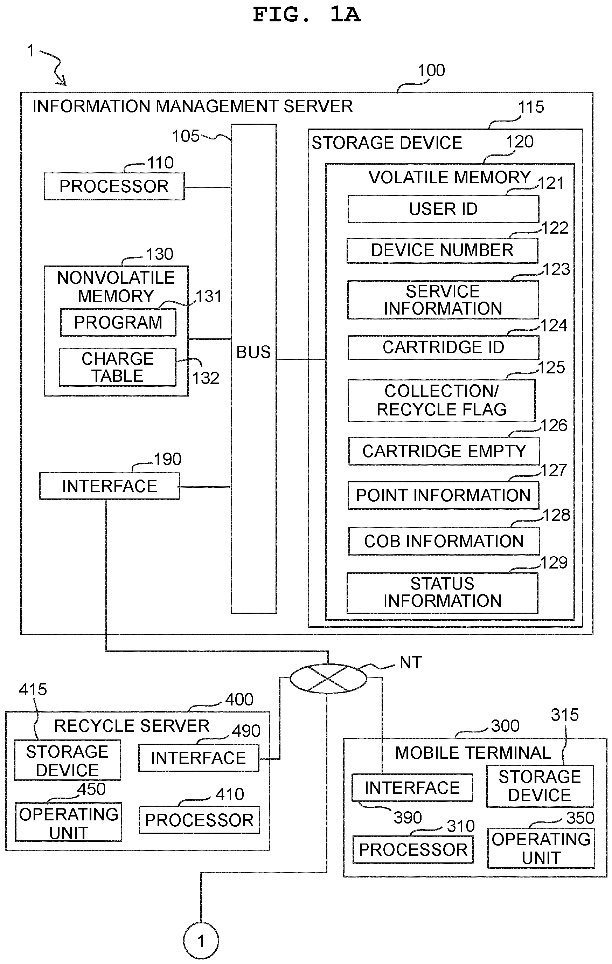

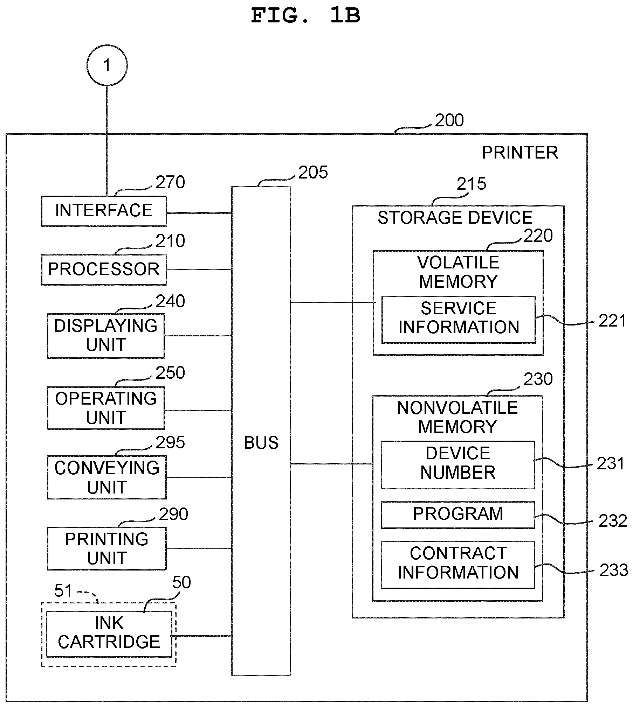

As depicted in FIGs. 1A and 1B, the printing service delivery system 1 includes an information management server 100, a printer 200, a mobile terminal 300, and a recycle server 400. The information management server 100, the printer 200, the mobile terminal 300, and the recycle server 400 are connected to a network NT and can communicate with each other.

### <Management server>

The information management server 100 is a server installed and managed by a manufacturer of the printer 200, for example. The information management server 100 has a processor 110, a storage device 115, and an interface 190. The processor 110, the storage device 115, and the interface 190 are connected to each other via a bus 105. The information management server 100 is an example of an information management apparatus. The information management server 100 may be configured as a collection of multiple servers.

The storage device 115 has a volatile memory 120 and a nonvolatile memory 130. The volatile memory 120 is, for example, a DRAM and has a user ID storage area 121, a device number storage area 122, a service information storage area 123, a cartridge ID storage area 124, a collection/recycle flag storage area 125, a cartridge empty information storage area 126, a point information storage area 127, a COB information storage area 128, and a status information storage area 129. The details of these storage areas 121-129 are described below.

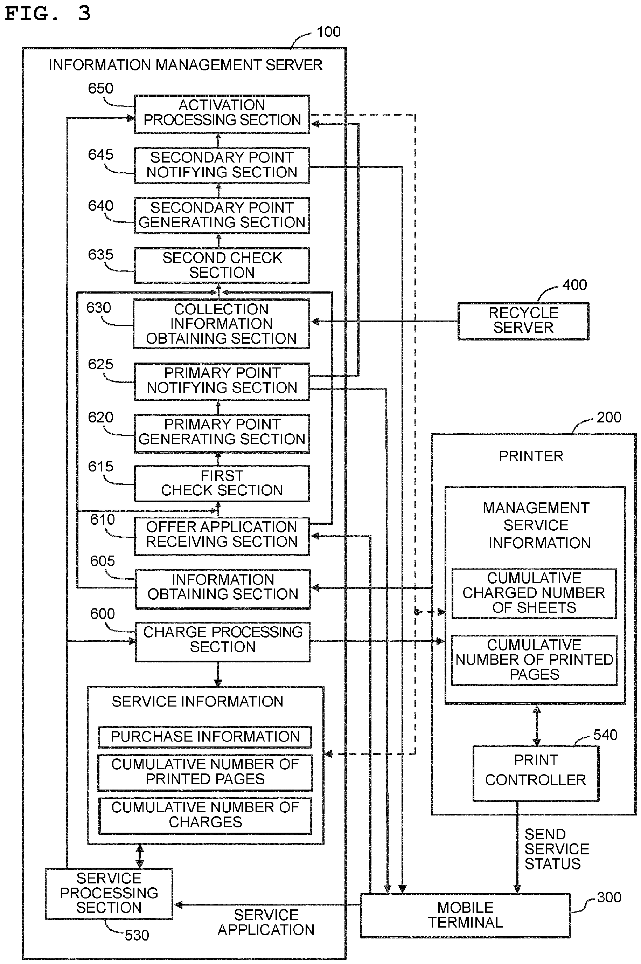

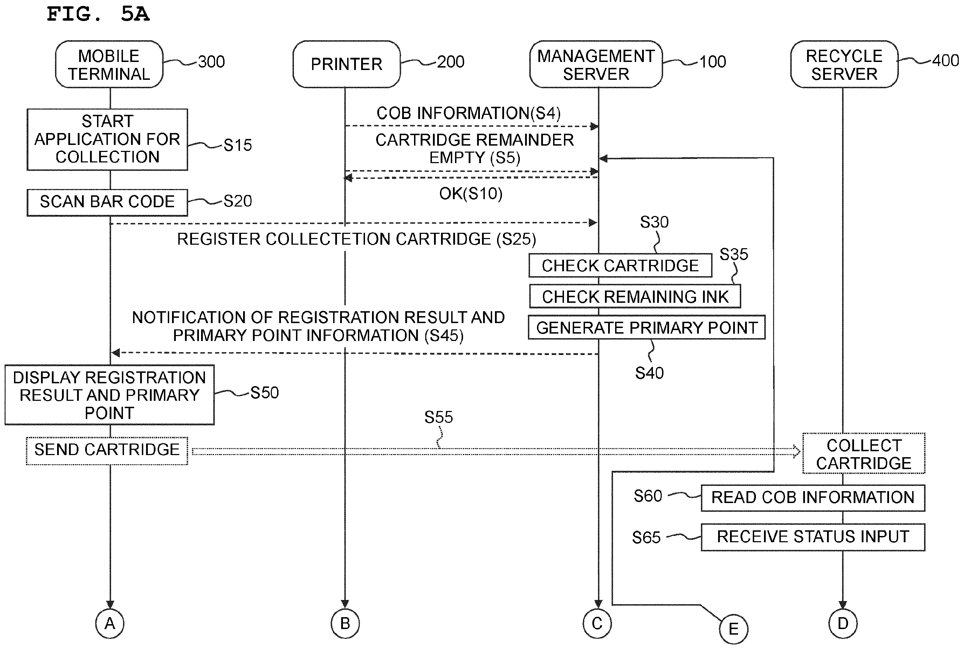

The nonvolatile memory 130 is, for example, a hard disk drive or a solid state drive and has a program storage area 131 and a charge table storage area 132. The program storage area 131 stores various programs. The various programs include various programs related to delivery of the printing service based on a software block diagram in FIG. 3 and sequence diagrams in FIGs. 5A, 5B, FIGs. 6A, 6B, and FIGs. 7A, 7B, etc. described below. The charge table storage area 132 stores, for example, predetermined correlations for calculating the fees charged to the user corresponding to the number of sheets to be made available for printing when the aforementioned prepaid printing service contract has been concluded.

The processor 110 is a data processing device such as a CPU, and executes various programs, including programs related to the printing service, stored in the program storage area 131. The processor 110 performs various processes depicted in FIGs. 5A, 5B, FIGs. 6A, 6B, FIGs. 7A, 7B, etc. below, including data communications to the mobile terminal 300, the printer 200, and the recycle server 400, etc. connected to the network NT. The processor 110 cooperates with the printer 200, the mobile terminal 300, the recycle server 400, etc. to execute the processing methods related to generation and assignment of points and various identification information as described below by the print service delivery system 1 of this embodiment. The program stored in the program storage area 131 and the processor 110 which uses the program are an example of a controller.

The interface 190 is a wired LAN interface or a wireless interface for communicating with other apparatus and is connected to the network NT. Interface 190 is an example of a communication interface.

The storage device 115 is not limited to the above configuration, but may be configured with, for example, RAM, ROM, EEPROM (EEPROM is a registered trademark of Renesas Electronics Corporation), HDD, a portable storage medium such as a USB memory attached to or detached from the mobile terminal 300, a buffer of the processor 110, or a combination thereof. The nonvolatile memory 130 is a computer-readable storage medium. A computer-readable storage medium is a non-transitory medium. The non-transitory medium includes recording medium such as CD-ROM, DVD-ROM, etc., in addition to the above examples. The non-transitory medium is also a tangible medium. The same applies to the storage device 215 of the printer 200 described below.

### <Printer>

The printer 200 is owned, for example, by a printing service provider of the above printing services or a user. The printer 200 has a printing unit 290, a conveying unit 295, a processor 210, a storage device 215, a displaying unit 240, an operating unit 250, and an interface 270. The printing unit 290, the processor 210, the storage device 215, the displaying unit 240, the operating unit 250, and the interface 270 are connected to each other via a bus 205. The printer 200 is an example of a printer.

The storage device 215 includes a volatile memory 220 and a nonvolatile memory 230. The volatile memory 220 is, for example, a DRAM and has a service information storage area 221 that stores management service information as described below. The nonvolatile memory 230 is, for example, a flash memory and has a device number storage area 231, a program storage area 232, and a contract information storage area 233 for storing details of contract signed by the user with a contract source. The device number storage area 231 stores a device number as an example of identification information of the printer 200. As another example of the device number, a MAC address may be used. The identification information of the printer 200 is hereinafter referred to as "printer information". Various programs are stored in the program storage area 232. The various programs include various programs related to the delivery of the printing service of this embodiment based on the software block diagram in FIG. 3, and the sequence diagrams in FIGs. 5A, 5B, FIGs. 6A, 6B, FIGs. 7A, 7B, etc. described below. These programs are stored in advance in the program storage area 232 as firmware, for example.

The processor 210 is a data processing device such as a CPU. The processor 210 executes various programs stored in the program storage area 232, and cooperates with the processor 110, the mobile terminal 300, the recycle server 400, etc. to execute the processing methods related to the generation and assignment of points and various identification information described below.

The displaying unit 240 is, for example, a liquid crystal display and can display various information. The displaying unit 240 does not have to be the liquid crystal display, for example, it can be a dedicated LED lamp. The operating unit 250 is a device that receives operations by the user. The user can input various instructions to the printer 200 by operating the operating unit 250. The interface 270 is a wired or wireless network interface for communicating with other apparatus and is connected to the network NT.

The conveying unit 295 picks up paper sheets in the paper feeding tray and conveys the paper sheets along a predetermined conveying path.

The printing unit 290 forms images on the paper sheets conveyed by the conveying unit 295 using a predetermined method. The following description will take the case where the images are formed by an inkjet method as an example. The printing unit 290 forms images on the paper sheets by using ink from an ink cartridge 50, which is detachably installed in the cartridge holder 51, in response to a print job. The print job is sent from the mobile terminal 300 together with an execution instruction of the print job (hereinafter simply referred to as "print instruction" as appropriate), or is generated by the printing unit 290 based on an operation to the operating unit 250. The ink cartridge 50 is an example of consumables.

### <Mobile terminal>

Mobile terminal 300 is a portable terminal such as a smartphone owned by the user, and is an example of a terminal device. The mobile terminal 300 is connected to the network NT via wireless communication. The mobile terminal 300 has an operating unit 350 which can be operated and input by the user as appropriate, a processor 310, a storage device 315, and an interface 390 for connecting to the network NT.

Various programs are stored in a program storage area (not depicted) provided in the storage device 315. The various programs include various programs related to the delivery of the printing service of this embodiment based on the software block diagram in FIG. 3, the sequence diagrams in FIGs. 5A, 5B, 6A, 6B, 7A, 7B, etc. described below. In a user ID storage area (not depicted) provided in the storage device 315, identification information of the user of the mobile terminal 300, such as a user ID or user account (hereinafter simply referred to as "user ID" as appropriate), is stored. The processor 310 executes the programs related to the printing service stored in the above program storage area. The processor 310 executes various processes depicted in FIGs. 5A, 5B, 6A, 6B, 7A, 7B, etc. below, including data communication to the information management server 100, the printer 200, the recycle server 400, etc. connected to the network NT. The processor 310 cooperates with the information management server 100, the printer 200, the recycle server 400, etc. to execute the processing methods related to the generation and assignment of the points and various identification information described below by the print service delivery system 1 of this embodiment.

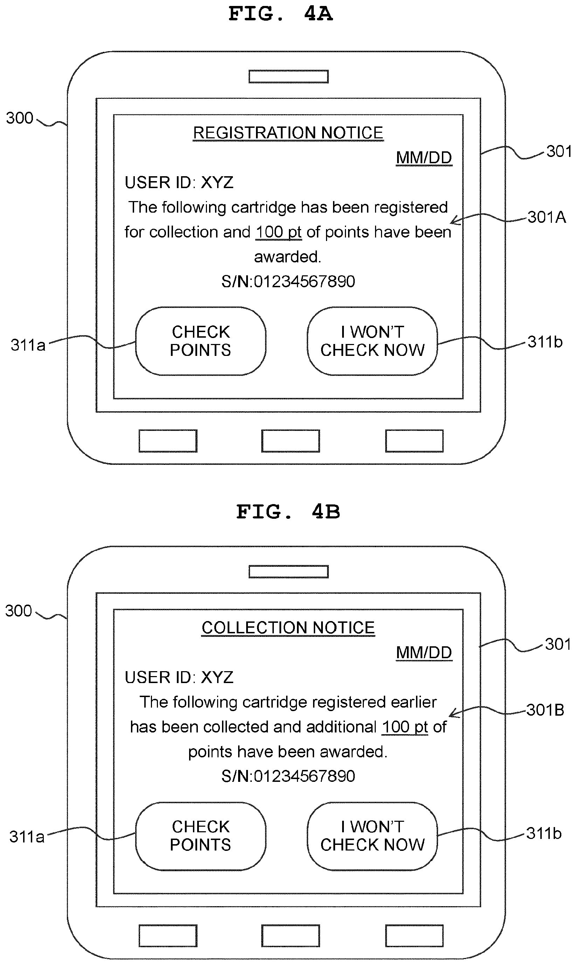

The mobile terminal 300 also includes a displaying unit 301 (see FIG. 4A, FIG. 4B, etc.). Examples of the displaying contents of the displaying unit 301 are described below. The mobile terminal 300 also has a reader (not depicted) capable of performing optical reading using known methods. Details of processes of the mobile terminal 300 using the reading unit are described below. Instead of the mobile terminal 300, other terminal device such as a personal computer, a tablet computer, or the like may be used.

### <Recycle server>

The recycle server 400 is provided, for example, by a recycle company who collects ink cartridges 50 for recycle and reuse, or an intermediary who acts as an intermediary to the recycle company (hereinafter simply referred to as "recycle company"). Details of the recycle and reuse of ink cartridges 50 are described below.

The recycle server 400 is connected to the network NT via wireless communication. The recycle server 400 has an operating unit 450 which can be operated and input by a person in charge of operations at the recycle server 400, a processor 410, a storage device 415, and an interface 490 for connecting to the network NT.

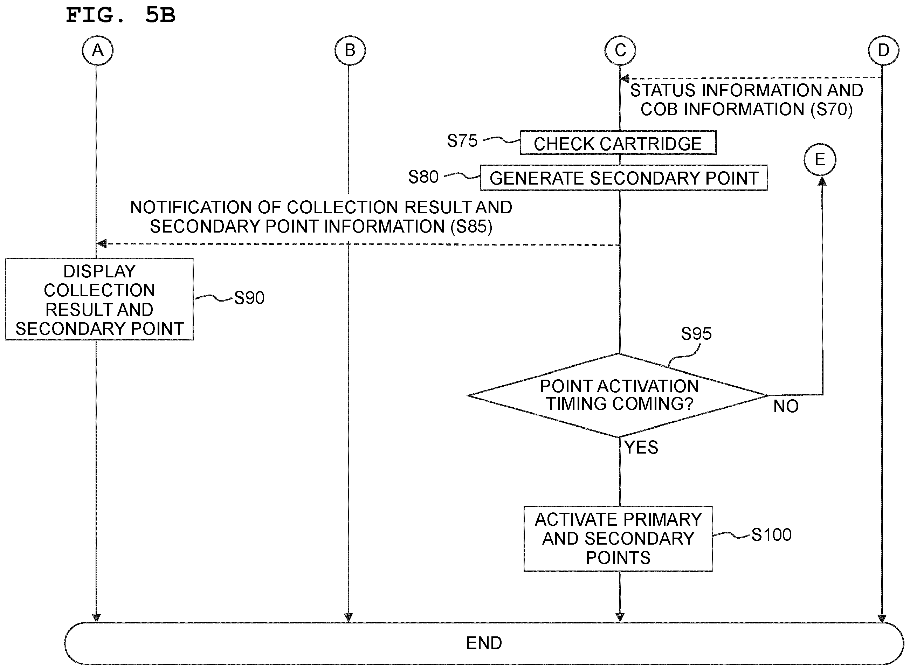

Various programs are stored in the program storage area (not depicted) provided in the storage device 415. The various programs include various programs related to the delivery of the printing service based on the software block diagram in FIG. 3, the sequence diagrams in FIGs. 5A, 5B, 6A, 6B, 7A, 7B, etc. described below. The processor 410 executes the programs related to the printing service stored in the above program storage area. The processor 410 executes various processes depicted in FIGs. 5A, 5B, etc., including data communication to the information management server 100, etc. connected to the network NT. The processor 410 executes the various processing methods described below by the print service provision system 1 in cooperation with the information management server 100, etc. The recycle server 400 also configures a recycle system including a reader apparatus (not depicted) capable of executing optical reading by known methods. Details of the process of the recycle server 400 as a recycle system using the reader apparatus are described below.

### <Prepaid printing service>

As described above, the system provides a prepaid printing service in which the user pays a fee based on a usage contract in advance to use the printing functions of the printer 200. The service processing section 530 of the information management server 100 accepts the prepaid printing service application from the mobile terminal 300, and the prepaid printing service is applied to the printer 200. In other words, this is a pay-as-you-go service in which the user purchases printing privileges for the printer 200 via mobile terminal 300 for a fee in advance and can print only the number of sheets guaranteed by the printing privileges. For example, the number of sheets which can be printed may be guaranteed by the printing privileges which can be obtained free of charge at the time of purchase of the printer 200. There may also be both fee-based printing privileges and free printing privileges.

### <Charge amount and charged number of sheets>

In a case of a prepaid fee system, the user can print according to the number of printable sheets (hereinafter simply referred to as "charged number of sheets") guaranteed by the printing privileges obtained by the amount paid as the charge price (hereinafter simply referred to as "charge amount"). In this case, for example, based on a charge table stored in the charge table storage area 132 of the information management server 100, multiple charge plans are presented to the user, each specifying how many printable sheets can be obtained by paying how much, and the user selects a desired charge plan from the charge plans.

### <Recycle of ink cartridges>

On the other hand, in recent years, from the viewpoint of environmental protection and ecology, reuse of consumables such as the ink cartridges 50 is being attempted. In the case of reusing ink cartridges 50, recycling is usually performed at a dedicated recycle plant owned by the recycle company.

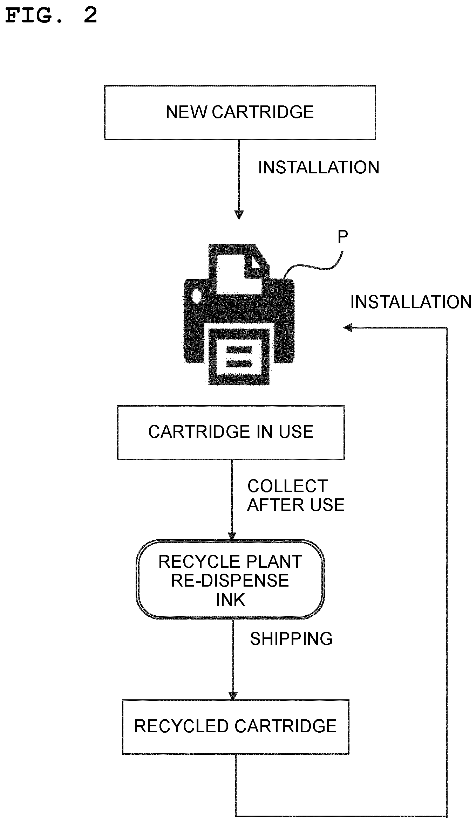

Specifically, as depicted in FIG. 2, when a new ink cartridge 50 is installed and used in a printer P including the printer 200, etc. When the ink is used and the ink cartridge 50 is empty, the ink cartridge 50 is collected to the recycle plant by the recycle company. At the recycle plant, ink is re-dispensed into the ink cartridge 50, and the ink cartridge 50 is shipped as a recycled product, or a reused product, which can be used by the user again. The aforementioned recycle server 400 is located at the recycle plant.

In this embodiment, in order to promote the above reuse, points are awarded as a privilege to the user who offers a used ink cartridge 50 for collection by the recycle company. In this case, the user pre-registers the fact that he/she sends and offers the ink cartridge 50 which he/she wishes to collect, for authentication of the ink cartridge 50 on the recycle server 400 and the information management server 100, and primary points are firstly awarded at that time. Then, when the recycle server 400 confirms that the sent ink cartridge 50 has arrived at the recycle plant, secondary points are subsequently awarded. The primary and secondary points are then returned to the user in some form of benefit at an appropriate time thereafter. For example, the primary and secondary points can be used as an addition to the charged number of sheets described above.

### <Software block configuration>

The software block configuration for the various processes, such as the above-mentioned point assignment and authentication is depicted in FIG. 3.

### <Service processing section of the management server>

As depicted in FIG. 3, the information management server 100 has the service processing section 530. As an example, the service processing section 530 is configured with the processor 110 described above and the corresponding portion of the program stored in the program storage area 131.

The service processing section 530 of the information management server 100 accepts applications for the above printing services and the like from the user via the mobile terminal 300, and executes appropriate processes necessary to provide each service while referring to the latest service information. The service information is the information stored in the service information storage area 123 in the volatile memory 120 of the information management server 100 depicted in FIG. 1A. The service information includes, in this example, the cumulative charged number of sheets, the cumulative number of printed pages, and purchase information indicating what billing plan was purchased by what user and when, etc.

The cumulative charged number of sheets is the cumulative value from the past to the present of the charged number of sheets, which is guaranteed by the purchase of a single billing plan, as described above. The cumulative number of printed pages is information that manages how many sheets of the cumulative charged number of sheets that the user has charged in the past have actually been printed, or in other words, how much of the number of printable pages that the above printing authority guarantees has actually been printed. The service processing section 530 of the information management server 100 registers the corresponding purchase information when the user purchases the billing plan. The service processing section 530 stores the user ID corresponding to the purchase information in the user ID storage area 121 by associating the user ID with the purchase information.

### <Print controller of the printer>

The printer 200 has a print controller 540. As an example, the print controller 540 is configured with the aforementioned processor 210 and the corresponding part of the program stored in the program storage area 232. The print controller 540 of the printer 200 controls printing operations of the printing unit 290 according to instructions from the mobile terminal 300 or other terminal device, based on management service information. The management service information is information stored in the service information storage area 221 in the volatile memory 220 of the printer 200 depicted in FIG. 1B. The management service information includes the cumulative charged number of sheets and the cumulative number of printed pages. The service information is backed up in an undepicted rewritable nonvolatile memory such that the service information is not lost when the printer 200 is turned off. The print controller 540 also has a function of transmitting the service status including the contents of the management service information at that time, to the mobile terminal 300 and presenting the service status to the user.

### <Updating service information by the printer and the management server>

The cumulative number of printed pages is generated and modified by the printer 200, which actually performs print control. The cumulative charged number of sheets is generated and modified by the information management server 100, which accepts and processes the charge.

The information management server 100 needs to manage the cumulative number of printed pages in the printer 200 in real time as much as possible in order to perform a receiving process of the printing service. On the other hand, the printer 200 needs to limit the number of sheets that can be printed within the charged number of sheets actually ordered. Therefore, the information management server 100 and printer 200 synchronize and update the respective information by sending and receiving data to and from each other on a regular basis, for example, at an appropriate cycle. Specifically, information including the cumulative charged number of sheets is sent from the information management server 100 to the printer 200 by a charge processing section 600. Information including the cumulative number of printed pages is sent from the printer 200 to the information management server 100. The contents of the information received by each are updated.

The print controller 540 of the printer 200 manages to print only within the printable number of pages, which is obtained by subtracting the cumulative number of printed pages from the cumulative charged number of sheets of the management service information stored by the printer 200 at that time. When actually printing, the print controller 540 updates the cumulative number of printed pages in the management service information to be counted up by the number of printed pages. For example, the print controller 540 can output a displaying signal to warn and display a charge-zero status, when the charged number of sheets that can be printed with the charged amount is completed, i.e., when the cumulative number of printed pages counted up reaches the cumulative charged number of sheets. The charge-zero status indicates that the number of printable pages has become zero.

### <Other functional sections of the information management server>

The information management server 100 further includes the charge processing section 600, an information obtaining section 605, an offer application receiving section 610, a first check section 615, a primary point generating section 620, a primary point notifying section 625, a collection information obtaining section 630, a second check section 635, a secondary point generating section 640, a secondary point notifying section 645, and an activation processing section 650. As an example, these functional sections 600-650 are respectively configured by the processor 110 and corresponding parts of the program stored in the program storage area 131.

### <Charge processing section>

The charge processing section 600 adds the value of the charged number of sheets corresponding to the billing plan to the value of the accumulated charged number of sheets in the management service information of the printer 200, in response to receiving the purchase application for the above billing plan from the mobile terminal 300. The charge processing section 600 also updates the content of the cumulative charged number of sheets by adding the value of the charged number of sheets corresponding to the billing plan to the value of the cumulative charged number of sheets in the service information of the information management server 100, in response to the addition of the cumulative charged number of sheets in the management service information of the printer 200. The charge processing section 600 stores the device number of the printer 200 corresponding to the cumulative charged number of sheets in the device number storage area 122, linking the device number to the cumulative charged number of sheets.

### <Information obtaining section>

The information obtaining section 605 obtains a cartridge ID, which is identification information of the ink cartridge 50 installed in the printer 200, from the printer 200. The information obtaining section 605 also obtains ink empty information, which corresponds to the degree of consumption of the ink cartridge 50, i.e., the degree of ink depletion. The ink empty information indicates that the remaining ink has become not more than a predetermined threshold. This information can be obtained, for example, by the communication section (not depicted) in the printer 200 reading the information from the IC chip or other storage device (not depicted) in the ink cartridge 50 through communication. The cartridge ID obtained at this time is an example of the first identification information, and the ink empty information is an example of the consumable information.

### <Offer application receiving section>

The offer application receiving section 610 receives an application from the mobile terminal 300 to register the offer of the ink cartridge 50 to the collection operator. The offer application receiving section 610 also obtains the cartridge ID, which is the identification information of the ink cartridge 50, based on the result of reading a bar code, etc. on the ink cartridge 50 by a scanner of the mobile terminal 300, or inputted by the user at the mobile terminal 300. The cartridge ID obtained at this time is an example of the second identification information, and the registration application is an example of the offer application.

### <First check section>

The first check section 615 checks whether the cartridge ID obtained as described above by the information obtaining section 605 matches the cartridge ID included in the registration application received by the offer application receiving section 610. The first check section 615 may also check whether other information associated with the cartridge ID also matches. For example, the user ID associated with the cartridge ID may also be checked. For example, the device number associated with the cartridge ID may also be checked.

### <Primary point generating section>

The primary point generating section 620 generates primary points, which are user benefits related to printing using the printer 200, in response to the registration application received in the offer application receiving section 610. In detail, the primary point generating section 620 generates the primary points when the two cartridge IDs mentioned above match in the check in the first check section 615. The primary points are an example of the first privilege information.

### <Primary point notifying section>

The primary point notifying section 625 sends a notification to the mobile terminal 300 indicating that the registration application was received by the offer application receiving section 610 as described above, and that the primary point was generated by the primary point generating section 620. The notification sent from the primary point notifying section 625 to the mobile terminal 300 is an example of the first notification.

Upon receiving the above notification, the mobile terminal 300 displays the corresponding information on the displaying unit 301. An example of the displaying unit 301 of the mobile terminal 300 is depicted in FIG. 4A.

As depicted in FIG. 4A, in this example, displaying screen 301A of the registration notice is displayed on displaying unit 301. The display screen 301A displays a date of the notification, the user ID, and the cartridge ID of the ink cartridge 50. The display screen 301A also displays a message including the contents of the above primary point awarded. An example of the message is "The following cartridge has been registered for collection and 100 pt of points have been awarded."

In this example, on the display screen 301A of the registration notice, the user can select whether or not to check the contents of the points corresponding to the primary point allocation. In other words, the display screen 301A includes a "CHECK POINTS" button 311a and a "I WON'T CHECK NOW" button 311b. For example, when the user operates the "CHECK POINTS" button 311a, a confirmation screen depicting the numerical value of the primary points awarded, the numerical value of the total with the past points, etc. is displayed on the display screen 301A, or on another screen that transitions from the display screen 301A, or in another window that is interrupted on the display screen 301A, etc. For example, if the user operates the "I WON'T CHECK NOW" button 311b, the above confirmation screen is not displayed and the screen returns to the prescribed initial screen.

When the notification is sent from the primary point notifying section 625 to the mobile terminal 300, a notice may also be sent to the mobile terminal 300 advising that the secondary points described below will be generated and awarded in response to the collection at the recycle company of the ink cartridge 50 for which a registration notice has been submitted. This notification is an example of a second notification, and the process performed by the primary point notifying section 625 at this time is an example of the second notifying process.

### <Collection information obtaining section>

Returning to FIG. 3, the collection information obtaining section 630 obtains a collection information indicating that the ink cartridge 50, for which the registration application has been made, has been collected by the recycle company, from the recycle server 400. The recycle company is an example of the collection operator.

The collection information includes, for example, COB information described below, which is read from an IC chip or other memory (not depicted) installed in the ink cartridge 50 and obtained by the recycle server 400. Alternatively, the collection information may be information including COB information obtained by a reading device of the recycle server 400 based on a reading result of the bar code, etc. attached to the ink cartridge 50 or the package of the ink cartridge 50. As described below, the obtained COB information includes the cartridge ID of the collected ink cartridge 50. The cartridge ID is an example of the third identification information.

The collection information also includes status information of the ink cartridge 50. The status information indicates, for example, that the ink cartridge 50 is dirty, at least partially damaged, or in some other state that affects obtaining the COB information, and is manually input by a person in charge of the business via the operating unit 450 of the recycle server 400.

### <Second check section>

The second check section 635 checks whether the cartridge ID obtained as described above by the information obtaining section 605 matches the cartridge ID included in the registration application received by the offer application receiving section 610 and the cartridge ID included in the collection information obtained as described above by the collection information obtaining section 630. The second check section 635 may also check whether other information associated with the cartridge ID also matches. For example, the user ID associated with the cartridge ID may also be checked. For example, the device number associated with the cartridge ID may also be checked.

### <Secondary point generating section>

The secondary point generating section 640 generates secondary points, which are user benefits related to the printing using the printer 200, according to the above collection information obtained by the collection information obtaining section 630. In detail, the secondary point generating section 640 generates secondary points when the three cartridge IDs mentioned above match in the check in the second check section 635. The secondary points are an example of the secondary privilege information.

### <Secondary point notifying section>

The secondary point notifying section 645 sends a notification to the mobile terminal 300. The notification indicates that the ink cartridge 50 has been collected by the recycle company and that the secondary points have been generated by the secondary point generating section 640. The notification sent from the secondary point notifying section 645 to the mobile terminal 300 is an example of the third notification.

Upon receiving the above notification, the mobile terminal 300 displays corresponding information on the displaying unit 301. FIG. 4B depicts an example of the displaying unit 301 of the mobile terminal 300.

As depicted in FIG. 4B, in this example, displaying screen 301B of the collection notice is displayed on the displaying unit 301. In the display screen 301B, a date of the notification, the user ID, and the cartridge ID of the ink cartridge 50 are displayed, similar to the display screen 301A. The display screen 301B also displays a message including the contents of the secondary points awarded. An example of the message is "The following cartridge registered earlier has been collected and additional 100 pt of points have been awarded."

In this example, the user can also select whether or not to confirm the points corresponding to the aforementioned secondary points on the display screen 301B of the collection notice. In other words, the display screen 301B includes a "CHECK POINTS" button 311a and a "I WON'T CHECK NOW" button 311b, which are similar to the aforementioned display screen 301A. For example, when the user operates the " CHECK POINTS " button 311a, a confirmation screen depicting the secondary points awarded, the total of the secondary points and the aforementioned primary points, the total value of the secondary points, the aforementioned primary points, and past points, etc. is displayed on the display screen 301B, or on another screen that is transferred from the display screen 301B, or in another window that interrupts the display screen 301B, etc. For example, if the user operates the " I WON'T CHECK NOW " button 311B, the above confirmation screen is not displayed, and the display returns to the prescribed initial screen.

### <Activation processing section>

Returning to FIG. 3, the activation processing section 650 activates the primary and secondary points in a user-utilizable manner at a predetermined timing after the generation of secondary points by the secondary point generation section 640 described above. For example, the primary and secondary points are generated by the primary point generation section 620 and the secondary point generation section 640, respectively, and added up to each other. However, until the activation processing by the activation processing section 650, the user cannot utilize the primary and secondary points as his/her own benefits in any way.

### <Control procedure>

The following sequence charts in FIGs. 5A and 5B illustrate an example of a control procedure executed by the mobile terminal 300, the information management server 100, the recycle server 400, and the printer 200 in cooperation to achieve the above method.

In S4 of FIG. 5A, when the printer 200 is turned on with the ink cartridge 50 installed, the communicating unit (not depicted) in the printer 200 reads and obtains information stored in a memory (not depicted) such as the IC chip included in the ink cartridge 50, by communication. The information obtained in this way is depicted by the abbreviation of "COB information". The COB information includes the cartridge ID for identifying the ink cartridge 50. The obtained COB information, together with a device number unique to the printer 200, is transmitted to the information obtaining section 605 of the information management server 100. The obtained cartridge ID is stored in the cartridge ID storage area 124 and the obtained device number is stored in the device number storage area 122, while being associated with each other. When a known mechanism in the printer 200 detects that the remaining ink of the ink cartridge 50 installed in the printer 200 has become not more than the above threshold value, the corresponding ink empty information is sent from the printer 200 together with the cartridge ID and device number. In the information management server 100, at S5, the information obtaining section 605 obtains the ink empty information, and the ink empty information is stored in the cartridge empty information storage area 126 in association with the device number and the cartridge ID. At this time, at least one of the device number of the printer 200 and the cartridge ID of the ink cartridge 50 is associated with the corresponding user ID in the information management server 100, for example, when the aforementioned prepaid printing service contract is concluded (not depicted). In S5, the user ID is obtained based on the device number or the cartridge ID and the user ID is stored in the user ID storage area 121. The process performed by the information obtaining section 605 in S4 and S5 is an example of the first information obtaining process.

In S10, an OK notification is sent from the information obtaining section 605 of the information management server 100 to the printer 200. The OK notification indicates that the process in S5 has been completed.

When the user recognizes that the ink level in the ink cartridge 50 installed in the printer 200 has decreased to some extent, and performs an appropriate operation on the mobile terminal 300, an application program for ink cartridge collection that has already been installed in advance is started in S15.

In S20, the user reads the bar code, etc. attached to the ink cartridge 50 installed in the printer 200 by using the reader, and the corresponding cartridge ID is transmitted from the mobile terminal 300 to the information management server 100 in S25. As described above, the cartridge ID may be input manually by the user via the operating section 350 of the mobile terminal 300. The transmission of the cartridge ID in S25 is an indication of the user's intention to offer the ink cartridge 50 for collection by the recycle company, and is a registration application of the corresponding cartridge ID to the information management server 100. The transmitted cartridge ID is obtained by the offer application receiving section 610 of the information management server 100 and stored in the cartridge ID storage area 124. The process executed by the offer application receiving section 610 in S25 is an example of the offer application receiving process. The offer application receiving section 610 that executes this process is an example of the offer application receiving section.

In the information management server 100, at S30, the first check section 615 checks whether the cartridge ID obtained at S4 and stored in the cartridge ID storage area 124 and the cartridge ID stored in the cartridge ID storage area 124 at S25 match each other. In S35, the ink empty information obtained in S5 and stored in the cartridge empty information storage area 126 is read, and checked by the first check section 615 to see if the predetermined conditions are met. The predetermined condition is set to be that the amount of ink remaining in the ink cartridge 50 is close to empty, not more than a predetermined value, or the like. The reason is that if there is still ink remaining in the ink cartridge 50, it should be used up as much as possible, and it is undesirable to increase the number of collections and recycles even though the ink cartridge 50 can still be used, in order to reduce the environmental burden. The process performed by the first check section 615 in S30 is an example of the first consumables checking process.

If the two cartridge IDs match in the check in S30 and the ink empty information meets the above predetermined conditions in the check in S35, the primary point is generated by the primary point generating section 620 in S40. It is sufficient to determine the size of the numerical value of the generated primary points according to, for example, the attributes of the user, the contract, the usage pattern, the type of ink cartridge 50, and other factors as appropriate. The generated primary points are stored in the point information storage area 127 while being associated with, for example, the cartridge ID or the user ID. The process executed by the primary point generating section at S40 is an example of the first generating process. The primary point generating section 620 which executes the process is an example of the first generating section. Although not depicted in the figures, if the two cartridge IDs do not match in S30, or if the ink empty information does not meet the above predetermined conditions in S35, a predetermined error process is performed and no primary point is generated.

In S45, a notification indicating that registration has been made in response to the registration application in S25 and that the primary point has been generated in S40 is sent from the primary point notifying section 625 to the mobile terminal 300. The process executed by the primary point notifying section 625 in S45 is an example of the first notifying process.

At S50, the mobile terminal 300 that received the notice displays the display indicating the registration result and the contents of the primary point, as illustrated in FIG. 4A. After confirming this display, the user ships the ink cartridge 50 regarding the registration to the recycle company, for example, by mail (illustrated as S55 for convenience). When the shipped ink cartridge 50 arrives at the recycle company, the ink cartridge 50 is collected. The collected ink cartridge 50 is subjected to a prescribed recycle process as depicted in FIG. 2C at the recycle plant of the recycle company. Although a detailed explanation is omitted, the recycle process consists of one or more prescribed recycle processes that are performed sequentially according to the condition of the ink cartridge 50 to be recycled.

For the collected ink cartridge 50, the COB information is read by the recycle server 400 at S60. As described above, the COB information is read and obtained from the memory in the ink cartridge 50, or obtained based on the reading result of the bar code attached to the ink cartridge or the package of the ink cartridge 50. The COB information also includes the cartridge ID of the ink cartridge 50 collected. At S65, an input of status information of the ink cartridge 50 is received, for example, via the operating section 450 of the recycle server 400. The status information is, as described above, information indicating, for example, that the ink cartridge 50 is dirty, at least partially damaged, or some other condition that affects obtaining of the COB information. The status information may be automatically obtained by the recycle server 400 according to a predetermined status amount detected in the recycle process at the recycle plant, the number of processes required for the ink cartridge 50 among multiple recycle processes, etc. The COB information obtained by the recycle server 400 in S60 and S65 is sent to the information management server 100 in S70.

In the information management server 100, the collection information obtaining section 630 receives and obtains the COB information and the status information sent from the recycle server 400 in S70. The obtained COB information is stored in the COB information storage area 128 and the obtained status information is stored in the status information storage area 129, each associated with the cartridge ID or the user ID, for example. The cartridge ID included in the obtained COB information is stored in the cartridge ID storage area 124. At that time, a collection/recycle flag F corresponding to the ink cartridge 50 is generated as F=1. The collection/recycle flag F is stored in the collection/recycle flag storage area 125 while being associated with the cartridge ID of the ink cartridge 50. The process executed by the collection information obtaining section 630 at S70 is an example of the collection information obtaining process. The collection information obtaining section 630 executing the process is an example of the collection information obtaining section.

In S75, the second check section 635 checks whether the cartridge ID stored in the cartridge ID storage area 124 in S4, the cartridge ID stored in the cartridge ID storage area 124 in S25, and the cartridge ID obtained in S70 from the COB information and stored in the cartridge ID storage area 124 match each other. The process executed by the second check section 635 in S75 is an example of the second consumables checking process.

If the aforementioned three cartridge IDs match in the check at S75, the secondary point generating section 640 generates the secondary points at S80. It is sufficient to determine the size of the numerical value of the generated secondary points according to, for example, the attributes of the user, the contract, the usage pattern, the type of ink cartridge 50, and other factors as appropriate, similar to the primary points. The generated secondary points are stored in the point information storage area 127 while being associated with, for example, the cartridge ID or the user ID. The process executed by the secondary point generating section at S 80 is an example of the second generating process. The secondary point generating section 640 executing the process is an example of the second generating section. Although not depicted in the figures, if the three aforementioned cartridge IDs do not match in S75, a predetermined error process is performed and no secondary point is generated.

The three cartridge IDs of the cartridge ID obtained and stored in S4, the cartridge ID obtained and stored in S25, and the cartridge ID obtained and stored in S70 may not be checked at S75. In other words, at S75, the second check section 635 may check only two of the cartridge IDs: the cartridge ID obtained and stored in S25 and the cartridge ID obtained and stored in S70. In this case, if the two cartridge IDs match in the check at S75, the secondary point is generated by the secondary point generating section 640 at S80. In this case, the cartridge ID received by the offer application receiving section 610 in S25 is an example of the fourth identification information, and the cartridge ID included in the COB information obtained by the collection information obtaining section 630 in S70 is an example of the fifth identification information. The checking process of these two cartridge IDs performed by the second check section 635 in S75 is an example of the third consumables checking process.

In S85, a notification indicating that the collection of the ink cartridge 50 has been made in S55 as described above and that the secondary point has been generated in S80 is sent from the secondary point notifying section 645 to the mobile terminal 300. The process executed by the secondary point notifying section 645 in S85 is an example of the third notifying process.

At S90, if the mobile terminal 300 receives the notice, the mobile terminal 300 displays the collection results and the contents of the secondary point as illustrated in FIG. 4B.

In the information management server 100, at S95, the activation processing section 650 determines whether or not the timing has arrived at which the primary and secondary points granted as described above should be activated. The timing for activation is a fixed date, such as the last day of each month, or the 10th, or the 15th, etc., if it is set in advance that the total of the primary and secondary points that have been granted up to that point will be activated once a month. If the timing has not yet arrived, the process returns to S5 and the same procedure is repeated. If the timing has arrived, the process moves to S100.

In S 100, the activation processing section 650 activates the primary and secondary points in a manner that the user can utilize them. The process executed by the activation processing section 650 at S100 is an example of the activation process. As a result of the activation, the user can utilize the primary and secondary points as his/her own benefits in some form. In other words, the user is allowed to use all or part of the above totaled primary and secondary points. The fact that the points have been activated and can be used in this manner is stored in the service information storage area 123 in association with the corresponding user ID or the corresponding cartridge ID, for example. At this time, the activation processing section 650 reduces the value of the points stored in the point information storage area 127 by the amount of points that have been activated in a manner that allows the user to utilize them. As a method of utilization by the user, the user may be able to use the points as an addition to the aforementioned charged number of sheets by the information management server 100, as described above. Alternatively, in addition to the charged number of sheets, the user may be able to use the points as some kind of provision to the user, such as money, various services, various products, etc.

### <Effects of embodiment>

As explained above, in this printing service delivery system 1, the points are generated twice to facilitate the offer of the used ink cartridge 50 by the user. That is, the user who wishes to provide a used ink cartridge 50 to the recycle company registers the ink cartridge 50 to the recycle company at S25 by using the mobile terminal 300. In response to this registration, the primary point is generated in S40. When the user sends the used ink cartridge 50 to the recycle company, the collection information of the ink cartridge 50 is sent from the recycle server 400 to the information management server 100 in S70 to be obtained by the information management server 100. In response to the acquisition of the collection information, the secondary point is generated at S80.

As described above, in this embodiment, the primary point is generated when the ink cartridge 50 that has finished being used leaves the user's possession, and a secondary point is generated when the recycle company confirmed the collection of the ink cartridge 50. The primary and secondary points can be used in some way, for example, when the user uses the printer 200 or other printers.

According to this embodiment, since the points are generated twice, the user is given a strong incentive to actively send the used ink cartridge 50 to the recycle company after use. As a result, the certainty of the collection of the ink cartridge 50 can be improved.

In the above embodiment, the primary and secondary points were granted to the user in the form of being tied to the user ID. However, the primary and secondary points were granted to the printer 200 in the form of being tied to the printer information. In this case, the points can be used in some way when printing is performed by using the printer 200, regardless of the user who uses the printer 200.

In addition, the primary and secondary points are activated in S 100 at a predetermined timing after the generation of the secondary point. The user can utilize the primary and secondary points after activation as appropriate, for example, to facilitate printing by the printer 200. Since the user cannot use either the primary or secondary points in the state before activation, inappropriate behavior by the user, such as only registering the ink cartridge 50 with the information management server 100 by the mobile terminal 300 but not actually offering the ink cartridge 50 can be inhibited.

In this embodiment, in particular, the cartridge ID of the ink cartridge 50 is sent to the information management server 100 at S25 when registering from the mobile terminal 300. Meanwhile, the cartridge ID of the ink cartridge 50 installed in the printer 200 is transmitted from the printer 200 in S4. These two cartridge IDs are checked at S30 and S35 to see if the two cartridge IDs match. If the two cartridge IDs match, a primary point is generated at S40. According to this embodiment, by confirming that the cartridge IDs obtained in each of the two different processes match, the primary point can be generated with the ink cartridge 50 to be processed accurately identified.

In this embodiment, in particular, at S5, exhaustion information of the ink cartridge 50, such as the ink empty information, is also transmitted. In S30 and S35, whether or not the obtained ink empty information meets the predetermined conditions is also checked, and if the ink empty information meets the predetermined conditions, the primary point is generated. According to this embodiment, the primary point can be generated with more accurate identification of the ink cartridge 50 to be processed. In addition, by confirming that the registered ink cartridge 50 has been sufficiently consumed, the number of collections and recycles can be prevented from increasing, and the environmental burden can be reduced.

In this embodiment, once the registration from mobile terminal 300 is received at S25 and the primary point is generated at S40 accordingly, the corresponding notification is sent to the mobile terminal 300 at S45. According to this embodiment, the user can recognize that the registration of the ink cartridge 50 has been accepted by the information management server 100 and the primary point has been generated based on the receipt of the above notification by the mobile terminal 300.

If, as mentioned above, the user is given advance notice that the secondary point will be generated upon collection of the ink cartridge 50, the user can reliably recognize that the secondary point will be generated upon collection of the ink cartridge 50 based on the receipt of the notice by the mobile terminal 300. As a result, an even stronger incentive can be reliably provided to the user.

In this embodiment, the cartridge ID of the ink cartridge 50 is included in the collection information sent by the recycle company and is obtained by the information management server 100 at S70. The cartridge ID obtained at S70 and the cartridge IDs obtained at S4 and S25 respectively are checked at S75. If they match, the secondary point is generated. According to this embodiment, by confirming that the identification information of the ink cartridge 50 obtained in each of the three different processes matches, the secondary point can be generated with the ink cartridge 50 to be processed accurately identified.

If the cartridge ID obtained in S70 and the cartridge ID obtained in S25 are checked at S75 to see if they match, the secondary point is generated when the two cartridge IDs match. In this case, by confirming that the identification information of the ink cartridge 50 obtained in each of the two different processes matches, the secondary point can be generated with the ink cartridge 50 to be processed accurately identified.

In this embodiment, once the collection of the ink cartridge 50 by the recycle company has been confirmed and the secondary point is generated at S80 accordingly, the corresponding third notice is sent to the mobile terminal 300 at S85. According to this embodiment, the user can recognize that the ink cartridge 50 has been collected by the recycle company and the secondary point has been generated based on the receipt of the third notice by the mobile terminal 300.

### <Modified example>

The present teaching is not limited to the above embodiments, and the following modifications are also included in the technical scope. In the description of each of the following modifications, parts equivalent to the above embodiment are marked with the same symbol, and the explanation is omitted or simplified as appropriate.

### (1) In a case of checking by using printer information before generating secondary points

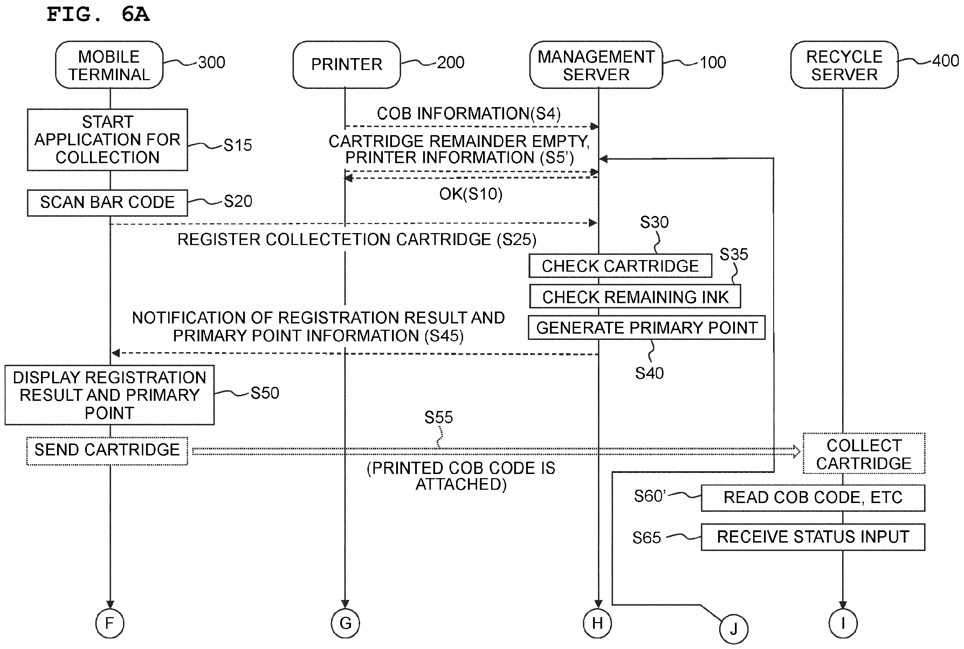

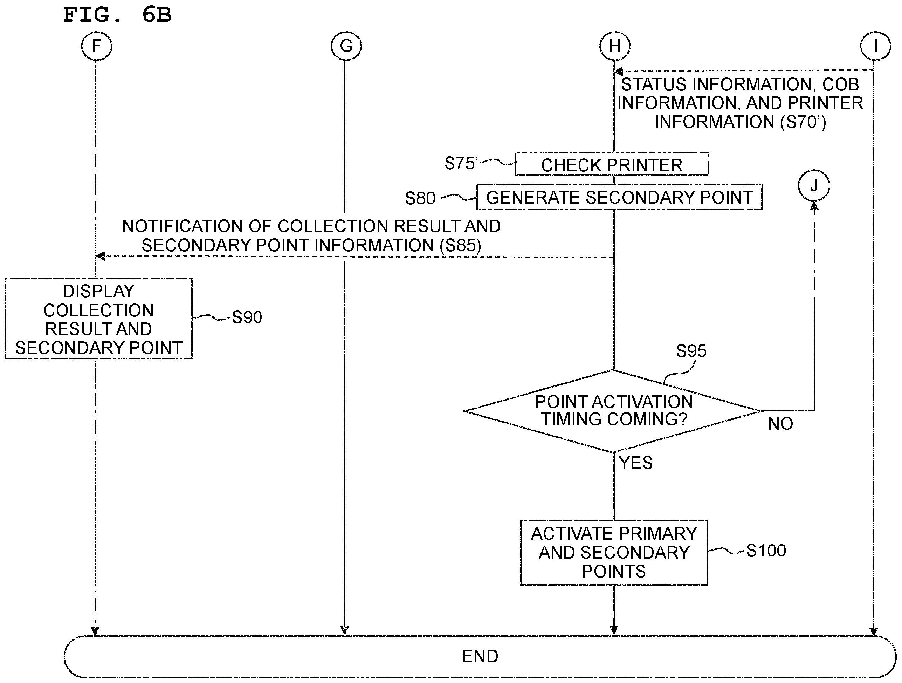

An example of a control procedure performed by the mobile terminal 300, the information management server 100, the recycle server 400, and the printer 200 working together to realize the method in this modification is described by the sequence diagrams in FIGs. 6A and 6B, which correspond to FIGs. 5A and 5B in the above embodiment.

As depicted in FIG. 6A, in S5' corresponding to S5 in FIG. 5A, the above ink empty information and the printer information read from the above device number storage area 231 are sent from the printer 200 when the remaining ink is detected to be not more than the threshold value. In the information management server 100, the information obtaining section 605 obtains the ink empty information and the printer information received in S5', and the printer information is stored in the device number storage area 122. The process executed by the information obtaining section 605 at S5' is an example of the second information obtaining process. The obtained printer information is an example of the sixth identification information.

After S10 to S50 as in FIG. 5A are executed, in this modified example, a COB code corresponding to the COB information is printed by the printer 200 using a known method by the user's appropriate operation at the time of shipping the ink cartridge 50 to the recycle company at S55. This COB code may be printed, for example, on the address label used when shipping the above ink cartridge 50, or on the package in which the ink cartridge 50 is packed at the time of shipping. In this modified example, the COB code and printer information of the printer 200 are also printed on the address label or the package. The printer information may be printed automatically by the printer 200 based on appropriate operations or instructions to the printer 200. The printer information may be printed by some manual input by the user. In either case, it is sufficient if the printer information is attached to the collected ink cartridge 50 in some form.

At the recycle server 400 on the side of the recycle company that collected the ink cartridge 50 shipped above, the COB code and the printer information printed as described above are read by the above-mentioned reading unit of the recycle server 400 in S60', which corresponds to S60. Through this reading, the aforementioned COB information corresponding to the COB code and the printer information of the printer 200 are obtained.

After S65, in S70' corresponding to S70, the COB information, the status information, and the printer information obtained in S60' and S65 are transmitted to the information management server 100 and obtained by the collection information obtaining section 630 of the information management server 100. The obtained printer information is stored in the device number storage area 122. The process executed by the collection information obtaining section 630 in S70' is also an example of the collection information obtaining process. The collection information obtaining section 630 which executes the process is an example of the collection information obtaining section. The printer information obtained in S70' is an example of the seventh identification information.

In S75' corresponding to S75, the second check section 635 checks whether the printer information stored in the device number storage area 122 in S5' and the printer information obtained in S70' and stored in the device number storage area 122 match each other, in addition to checking whether the cartridge IDs match each other. The process executed by the second check section 635 in S75' is an example of the printer checking process. In this modified example, if the aforementioned two printer information matches each other in the check in S75', the secondary point is generated by the secondary point generating section 640 in S80. The subsequent process is the same as that depicted in FIG. 5B, and the explanation is omitted.

### <Effects of the modified example>

In this modified example, when the ink cartridge 50 is collected by the recycle company, the printer information of the printer 200 associated with the ink cartridge 50 is obtained, and the printer information is included in the collection information sent from the recycle server 400 to the information management server 100 at S70'. Then, the printer information obtained from the printer 200 at S5' and the printer information obtained at S70' are checked at S75' to see if they match each other. If they match each other, the secondary point is generated at S80. According to this modified example, by confirming that the printer information of the printer 200 obtained in each of the two different processes matches, the secondary point can be generated with indirect and accurate identification of the ink cartridge 50 to be processed.

In addition, according to this modified example, a process based on the printer information specific to the printer 200 is sufficient, and since it is not necessary to use a user account as in a modified example (2) described below, it is preferable in terms of personal information protection.

### (2) In a case of checking by using a user ID before generating secondary points

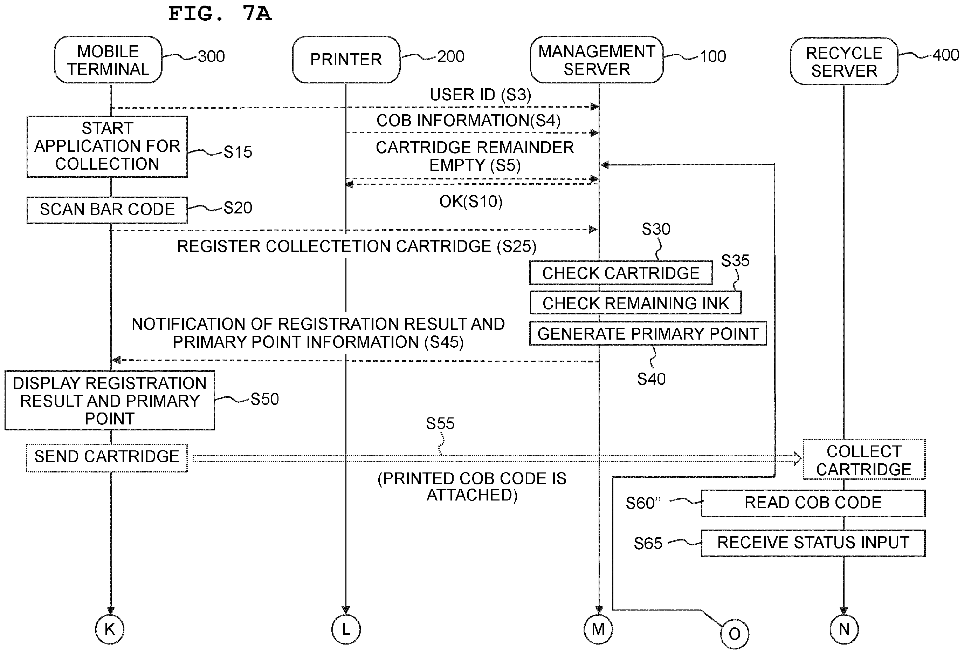

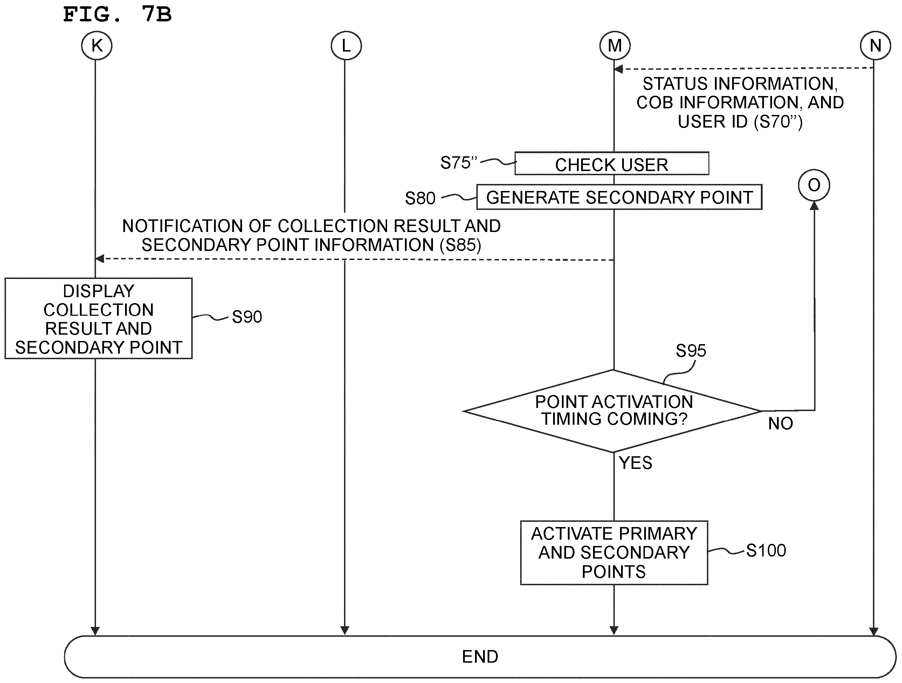

An example of a control procedure performed by the mobile terminal 300, the information management server 100, the recycle server 400, and the printer 200 working together to realize the method in this modified example is described by the sequence diagrams in FIGs. 7A and 7B, which correspond to FIGs. 5A and 5B and FIGs. 6A and 6B.

In this modified example, in FIG. 7A, the user ID previously stored in the storage device 315 of the mobile terminal 300 is transmitted to the information management server 100 at S3, which is executed at an appropriate timing before S4 as in FIG. 5A. In the information management server 100, the user ID received in S3 is obtained by the information obtaining section 605 and stored in the user ID storage area 121. The process executed by the information obtaining section 605 in S3 is an example of the third information obtaining process, and the printer information obtained is an example of the eighth identification information.

After S4 to S50 as in FIG. 5A are executed, the COB code is printed by the printer 200 on the address label or the package, etc. at the time of shipment in this modified example as in the above modified example (1). In this modified example, the user ID is also printed on the address label or the package, etc., along with the above COB code. The user ID may be printed by manual input by the user via the operating unit 250 of the printer 200, or the printer 200 may obtain and print the user ID from the mobile terminal 300 by appropriate operations on the mobile terminal 300. In any case, it is sufficient if the user ID is attached to the collected ink cartridge 50 in some form.

At the recycle server 400 in the recycle company that collects the above shipped ink cartridge 50, the COB code and user ID printed as described above are read by the above-mentioned reading unit of the recycle server 400 at S60" corresponding to S60 and S60' described above. By this reading, the aforementioned COB information corresponding to the COB code and the user ID are obtained.

After S65, in S70" corresponding to S70 and S70' described above, the COB information, the status information, and the user ID obtained in S60" and S65 are transmitted to the information management server 100 and are obtained by the collection information obtaining section 630 of the information management server 100. The obtained user ID is stored in the user ID storage area 121. The process executed by the collection information obtaining section 630 in S70" is also an example of the collection information obtaining process, and the collection information obtaining section 630 executing this process is also an example of the collection information obtaining section. The user ID obtained at S70" is an example of the ninth identification information.

In S75" corresponding to S75 and S75', in addition to checking whether the cartridge IDs match each other as in S75, the second check section 635 checks whether the user ID stored in the user ID storage area 121 in S4 and the user ID obtained in S70" and stored in the user ID storage area 121 match each other. The process executed by the second check section 635 in S75" is an example of the user checking process. In this modified example, if the two aforementioned user IDs match each other in the check in S75", the secondary point is generated by the secondary point generating section 640 in S80. The subsequent process is the same as that depicted in FIG. 5B, and the explanation is omitted.

### <Effects of the modified example>

In this modified example, when the ink cartridge 50 is collected by the recycle company, the user ID of the user of the printer 200 associated with the ink cartridge 50 is obtained, and the user ID is included in the collection information sent from the recycle server 400 to the information management server 100 at S70". Then, the user ID obtained from the mobile terminal 300 at S4 and the user ID obtained at S70" are checked at S75" to see if they match each other. If they match each other, the secondary point is generated at S80. According to this modified example, by confirming that the user IDs obtained in each of the two different processes match each other, the secondary point can be generated with indirect and accurate identification of the ink cartridge 50 to be processed.

For example, in the case of a user who uses multiple printers 200, the method described in the modified example (1) requires the user to handle printer information for each of the printers 200, which makes the process complicated. However, according to this modified embodiment, it is convenient to handle only one piece of information by using a user account.

### (3) Others

The above description is based on the case of prepaid printing service as an example of a printing service, but it is not limited to this. For example, it may be a fixed price printing service (so-called subscription printing service), provided that the maximum number of sheets to be printed is not exceeded in a certain period of time. In this case, points may be used for printing not less than the maximum number of sheets. Alternatively, the fixed price may be discounted according to the points. It is also possible that the customer does not receive printing services under a printing service contract. Even in such cases, various benefits can be realized, such as discount coupons for consumables, provision of contents for printing applications, etc.

In the above, the case in which printing is performed by an inkjet method is taken as an example, but this is not limited to this case. For example, a laser printer may be used instead of the inkjet printer. In this case, toner cartridges, drums, etc., in which toner is stored, are examples of consumables. In addition to the above, inkjet heads to be replaced, waste liquid boxes, etc. are also included in the consumables and may be subject to point allocation through collection.

In the above, the arrows depicted in FIG. 3 are examples of signal flow and do not limit the direction of the signal flow.

In addition, the sequence charts depicted in FIGs. 5A, 5B, 6A, 6B, 7A, 7B above are not limited to the procedures depicted in the sequence charts, and procedures may be added, deleted, or the order of procedures may be changed to the extent not to depart from the purpose and technical idea of the invention.

In addition to the above already mentioned, the methods in the above embodiments and each modified example may be used in combination as appropriate.

In addition, although not exemplified, the present teaching can be implemented with various modifications within the scope of the invention.

## Claims

1. An information management apparatus, comprising:
a communication interface configured to communicate, via a network, with a printer configured to execute printing by using consumables; and
a controller configured to execute:
an offer application receiving process for receiving an offer application to a collection operator of the consumables from a terminal device configured to communicate with the communication interface;
a first generating process for generating first privilege information regarding the printing by the printer in response to the offer application received in the offer application receiving process;
a collection information obtaining process for obtaining collection information in the collection operator of the consumables received the offer application; and
a second generating process for generating second privilege information regarding the printing by the printer in response to the collection information obtained in the collection information obtaining process.

2. The information management apparatus according to claim 1, wherein the controller is configured to further execute an activation process for activating the first privilege information and the second privilege information in a manner usable for a user, at a predetermined timing after generating the second privilege information in the second generating process.

3. The information management apparatus according to claim 1, wherein
the controller is configured to further execute a first information obtaining process for obtaining first identification information of the consumables installed in the printer, from the printer,
in the offer application receiving process, the controller is configured to receive the offer application including second identification information of the consumables, from the terminal device,
the controller is configured to further execute a first consumables checking process for checking whether the first identification information obtained in the first information obtaining process and the second identification information included in the offer application received in the offer application receiving process match with each other, and
in a case that the first identification information and the second identification match with each other in the first consumables checking process, the controller is configured to generate the first privilege information in the first generating process.

4. The information management apparatus according to claim 3, wherein
the controller is configured to obtain consumables information of the consumables together with the first identification information in the first information obtaining process, and
in a case that the first identification information and the second identification match with each other in the first consumables checking process and the consumables information satisfies a predetermined condition, the controller is configured to generate the first privilege information in the first generating process.

5. The information management apparatus according to claim 3 or 4, wherein the controller is configured to further execute a first notifying process for sending the terminal device a first notification indicating that the offer application has been received in the offer application receiving process and that the first privilege information has been generated in the first generating process.

6. The information management apparatus according to claim 5, wherein the controller is configured to further execute a second notifying process for sending the terminal device a second notification notifying in advance that the second privilege information will be generated in response to the collection of the consumables for which the offer application has been made.

7. The information management apparatus according to claim 3, wherein
in the collection information obtaining process, the controller is configured to obtain the collection information including third identification information of the consumables which have been collected, from the collection operator,
the controller is configured to further execute a second consumables checking process for checking whether the first identification information obtained in the first information obtaining process, the second identification information included in the offer application received in the offer application receiving process, and the third identification information included in the collection information obtained in the collection information obtaining process match with each other, and
in a case that the first identification information, the second identification, and the third identification information match with each other in the second consumables checking process, the controller is configured to generate the second privilege information in the second generating process.

8. The information management apparatus according to claim 1, wherein
in the offer application receiving process, the controller is configured to receive the offer application including fourth identification information of the consumables, from the terminal device,
in the collection information obtaining process, the controller is configured to obtain the collection information including fifth identification information of the consumables which have been collected, from the collection operator,
the controller is configured to further execute a third consumables checking process for checking whether the fourth identification information included in the offer application received in the offer application receiving process and the fifth identification information included in the collection information obtained in the collection information obtaining process match with each other, and
in a case that the fourth identification information and the fifth identification information match with each other in the third consumables checking process, the controller is configured to generate the second privilege information in the second generating process.

9. The information management apparatus according to claim 1, wherein
the controller is configured to further execute a second information obtaining process for obtaining sixth identification information of the printer in which the consumables have been installed, from the printer,
in the collection information obtaining process, the controller is configured to obtain the collection information including seventh identification information of the printer associated with the consumables which have been collected, from the collection operator,
the controller is configured to further execute a printer checking process for checking whether the sixth identification information obtained in the second information obtaining process and the seventh identification information included in the collection information obtained in the collection information obtaining process match with each other, and
in a case that the sixth identification information and the seventh identification information match with each other in the printer checking process, the controller is configured to generate the second privilege information in the second generating process.

10. The information management apparatus according to claim 1, wherein
the controller is configured to further execute a third information obtaining process for obtaining eighth identification information of a user of the printer, from the terminal device,
in the collection information obtaining process, the controller is configured to obtain the collection information including ninth identification information of a user of the printer associated with the consumables which have been collected, from the collection operator,
the controller is configured to further execute a user checking process for checking whether the eighth identification information obtained in the third information obtaining process and the ninth identification information included in the collection information obtained in the collection information obtaining process match with each other, and
in a case that the eighth identification information and the ninth identification information match with each other in the user checking process, the controller is configured to generate the second privilege information in the second generating process.

11. The information management apparatus according to any one of claims 8 to 10, wherein the controller is configured to further execute a third notifying process for sending the terminal device a third notification indicating that the consumables have been collected by the collection operator and that the second privilege information has been generated in the second generating process.

12. An information management system, comprising:
an offer application receiving section configured to receive an offer application to a collection operator of consumables to be installed in a printer;
a first generating section configured to generate a first privilege information regarding a printing by the printer in response to the offer application received by the offer application receiving section;
a collection information obtaining section configured to obtain collection information of the consumables in the collection operator; and
a second generating section configured to generate second privilege information regarding the printing by the printer in response to the collection information obtained by the collection information obtaining section.
